# EUROPEAN PATENT SPECIFICATION

(11) **EP 1 804 116 B1**
(45) Date of publication and mention of the grant of the patent: **19.08.2009**
(21) Application number: 05788185.6
(22) Date of filing: 29.09.2005
(51) Int. Cl.: G02F 1/13357, G02F 1/1335, F21S 2/00, G02B 5/20

(54) **COLOR LIQUID CRYSTAL DISPLAY**
FARB-FLÜSSIGKRISTALLANZEIGE
ECRAN COULEUR A CRISTAUX LIQUIDES

(30) Priority: 20.10.2004 JP 2004306073
(43) Date of publication of application: 04.07.2007
(73) Proprietor: Sony Corporation, Minato-ku Tokyo 108-0075 (JP)
(72) Inventor: HAGA, Shuichi,, Tokyo 108-0075 (JP); KAKINUMA, Koichiro,, Tokyo 108-0075 (JP); NAKATSUE, Takehiro,, Tokyo 108-0075 (JP); MATSUMOTO, Tatsuhiko,, Tokyo 108-0075 (JP)
(74) Representative: Tyson, Robin Edward
(86) International application number: PCT/JP2005/018003
(87) International publication number: WO 2006/043404

(56) References cited:
- WO-A-01/84227
- JP-A- 2001 135 118
- JP-A- 2002 099 250
- JP-A- 2003 233 062
- JP-A- 2003 331 608
- JP-A- 2004 118 133
- JP-A- 2005 100 932
- JP-A- 2005 234 134
- MORIYA N ET AL: "NEW COLOR FILTER FOR LIGHT-EMITTING DIODE BACK LIGHT" JAPANESE JOURNAL OF APPLIED PHYSICS, JAPAN SOCIETY OF APPLIED PHYSICS, TOKYO,JP, vol. 42, no. 4A, PART 01, 1 April 2003 (2003-04-01), pages 1637-1641, XP001191410 ISSN: 0021-4922

## Description

### Technical Field

This invention relates to a color liquid crystal display (LCD) apparatus and, more particularly, to a color liquid crystal display apparatus with which the color gamut can be made broader to assure more faithful color reproducing performance.

### Background Art

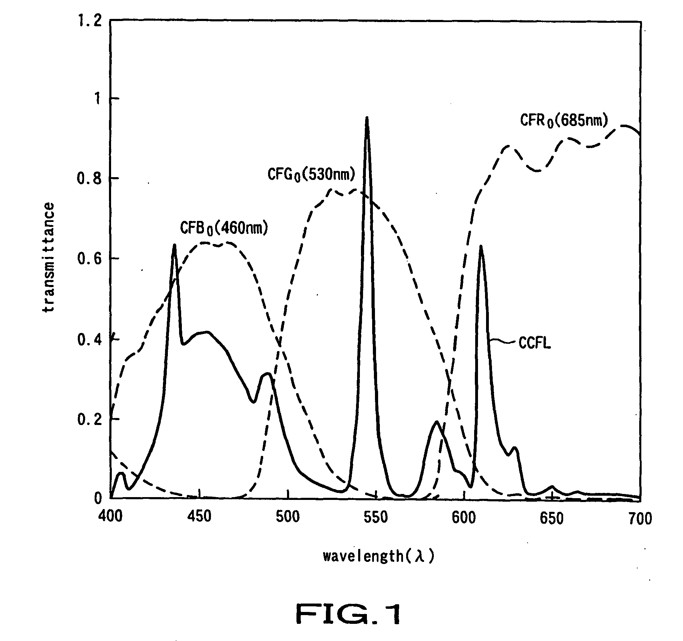

Among standard color spaces for computer display, there is the sRGB standard prescribed by IEC (International Electro-technical Commission). This standard gives a definition on the relationship between a video signals of red (R), green (G) and blue (B) and the colorimetric values by having chromaticity points of three prime colors of red (R), green (G) and blue (B) coincide with the colorimetric parameters of Rec.709 as recommended by ITU-R (International Telecommunication Union Radio communication). In a display apparatus, complying with this sRGB standard, if a video signal RGB is applied, the colorimetrically same color may be displayed.
Meanwhile, with a picture unit, receiving and displaying the color information, captured by a camera or a scanner, such as a display or a printer, it is essential to demonstrate the received color information accurately. For example, if a camera has captured the color information accurately, but a display demonstrates the color information only inappropriately, color reproduction performance of the system on the whole is deteriorated.
In a current standard monitor device, the display is prescribed by the color gamut of the sRGB standard. In actuality, there are many colors beyond the color gamut of sRGB, such that there are object colors that cannot be represented by a standard monitor device complying with the sRGB standard. For example, with a halide film used in a camera, or with a digital camera printer, the range of sRGB has already been exceeded. If the broad dynamic range is procured, and an image pickup operation is carried out correctly, there are produced object colors that cannot be represented on a standard monitor device of the sRGB standard.
The sYCC, having a color space broader than that of sRGB, has been adopted as a standard by business circles, in order to cope with the color gamut which has become broader. The sYCC has derived, from the sRGB, the luminance difference color difference separation space, using ITU-R BT.601, which is the international standard of a transformation matrix from RGB to YCC as defined for high vision television. The color gamut of sYCC is broader as the color space than the sRGB, such that, with the sYCC, the color outside sRGB can be represented.
On the other hand, in the NTSC system, adopted as the broadcast system for color television, the bandwidth is broader than in sRGB. If sYCC is to be implemented, the color gamut on the display with sYCC needs to be equivalent to or even exceed that of the NTSC system.
On the other hand, a TV receiver of an extremely thin thickness, such as one employing a liquid crystal display (LCD) or a plasma display panel (PDP), has been developed and put to practical use, to take the place of a TV receiver employing a cathode ray tube (CRT) which has long been used since the start of TV broadcasting. In particular, a color liquid crystal display apparatus employing a color liquid crystal display panel is expected to become popular in an accelerated manner because it permits driving with low power consumption and the large-sized color liquid crystal display panel has become less expensive.
As for the color liquid crystal display apparatus, the backlight system, in which a transmissive color liquid crystal display panel is illuminated from its backside with a backlight device to display a color picture, is in the mainstream. The light source, preferentially used for the backlight device, is a CCFL (Cold Cathode Fluorescent Lamp), emitting white light using a fluorescent tube.
In general, in a transmissive color liquid crystal display apparatus, a color filter, employing a tristimulus filter or a three prime color filter of spectral characteristics, shown for example in Fig.1, made up of a blue filter CFB₀ (460 nm), a green filter CFG₀ (530 nm) and a red filter CFR₀ (685 nm), where the numbers entered in parentheses denote the peak transmission wavelength of each filter, is provided from one pixel of the color liquid crystal display panel to another.
On the other hand, the white light, emitted by a three-wavelength CCFL, used as a light source for a backlight device of the color liquid crystal display apparatus, has a spectrum shown in Fig.1. That is, the white light emitted by the CCFL contains light of different intensities in a variety of wavelengths.
Hence, the color reproduced by the combination of the backlight device, having such CCFL, emitting the light of three wavelength ranges, as light source, and the color liquid crystal display panel, having the color filter, described above, is rather poor in color purity.

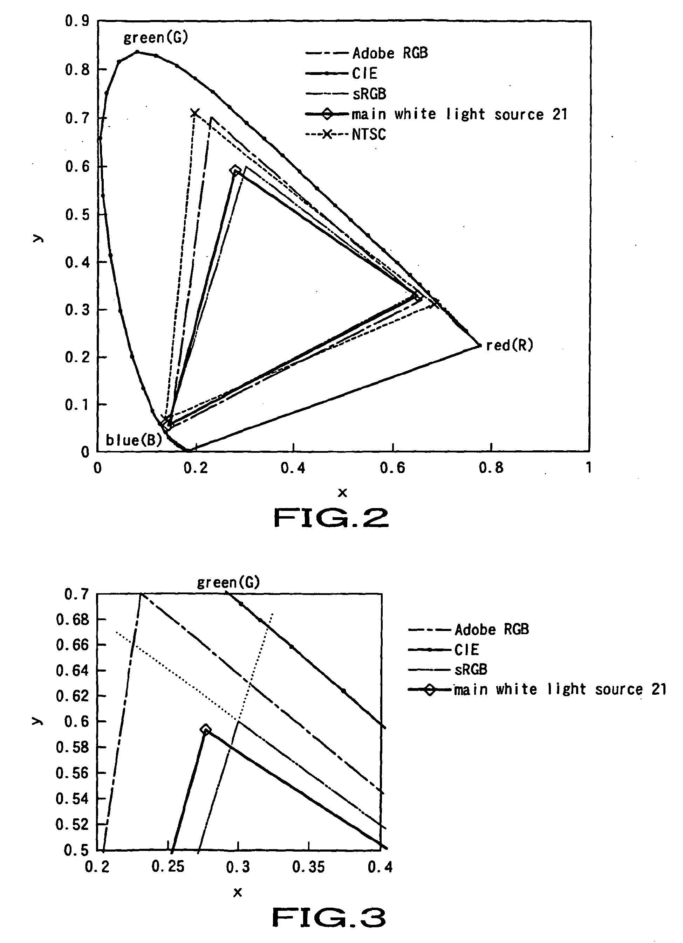

Fig.2 shows the color reproducing range of the color liquid crystal display apparatus, including the backlight device, having the above-described three-wavelength CCFL as a light source. Specifically, Fig.2 depicts an xy chromaticity diagram of the XYZ color system, as prescribed by the Commission Internationale de l'Eclairage (CIE). In Fig.2, there is also shown a color reproducing range of the Adobe RGB standard which is the standard for the color reproducing range as used in Photoshop, an application software prepared by the Adobe System Inc. The Adobe RGB standard, providing a color reproducing range broader than one of the sRGB standard, is not an international standard of reference, however, it is recognized as a de-facto standard for business uses, such as printing/publication. This Adobe RGB standard has come into extensive use with increase in a demand for monitoring color reproduction of printed matter using a large format display.
The color reproducing range of the color liquid crystal display apparatus, routinely used at present, and which is provided with a backlight device, having a CCFL as light source, is adapted to comply with the sRGB standard.
However, it is seen from Fig.2 that, if a color liquid crystal display panel is illuminated with a backlight device, having the CCFL as a light source, the color reproducing range of the sRGB standard is not satisfied, insofar as the green (G) region is concerned, given the luminance spectrum of the CCFL shown in Fig.1. In Figs.3, 4 and 5, the green (G), blue (B) and red (R) regions, shown in Fig.2, are shown to an enlarged scale, respectively.
Also, the color reproducing range of the color liquid crystal display apparatus, provided with a backlight device, having the CCFL as a light source, is narrower than the color reproducing range as provided for by the standard of the NTSC (National Television System Committee) system, as adopted as a color television broadcasting system (NTSC ratio: 74%), and hence cannot cope sufficiently with the current television broadcasting.
The document JP 2003 331 608 A discloses a liquid crystal display device with CCFLs and LEDs.

### Disclosure of the Invention

In view of the above problem, it is an object of the present invention to provide a color liquid crystal display apparatus of the backlight system in which, as the color reproducing range of the sRGB standard is covered perfectly, and in which the color gamut is made broader to improve the NTSC ratio as well as the degree of freedom in color creation.
The present invention provides a color liquid crystal display apparatus including a transmissive color liquid crystal display panel, having a color filter made up of three prime color filters for wavelength selecting and transmitting red light, green light and blue light, and a backlight device for illuminating the color liquid crystal display panel with white light from its backside. The backlight device includes a main white light source having a three wavelength phosphorescent lamp emitting light with three or more wavelengths, and an auxiliary light source having at least one of a red light emitting diode, a green light emitting diode and a blue light emitting diode. The red light emitting diode emits red light with a peak wavelength λpr = 645 nm, the green light emitting diode emits green light with a peak wavelength λpg = 555 nm and the blue light emitting diode emits blue light with a peak wavelength λpb = 440 nm. The backlight device also includes color mixing means for mixing the light emitted from the light source to generate the white light.
According to the present invention, a main white light source having a three wavelength phosphorescent lamp, emitting light with three or more wavelengths, and an auxiliary light source having at least one of a red light emitting diode, a green light emitting diode and a blue light emitting diode, are used as light sources of the backlight device. The red light emitting diode emits red light with a peak wavelength λpr = 645 nm, the green light diode emits green light with a peak wavelength λpg = 555 nm and the blue light emitting diode emits blue light with a peak wavelength λpb = 440 nm.
In this manner, it becomes possible to completely cover the color reproducing range of the sRGB standard in any color region. This has not been feasible with the conventional color liquid crystal display apparatus employing the three-wavelength phosphorescent tube as a light source. Moreover, the color ranges of the blue (B) and red (R) colors may be made broader without lowering the luminance.
According to the present invention, the color filter includes a red color filter having a peak wavelength of a transmission wavelength range Fpr such that 685nm ≤ Fpr ≤ 690 nm, and having a zero transmittance for light included in a transmission wavelength range of a blue filter. The color filter also includes a green filter having a peak wavelength of a transmission wavelength range Fpg equal to 530 nm, and also having a half-value width Fhwg of the transmission wavelength range such that 90 nm ≤ Fhwg ≤ 100 nm, as a result of decreasing the transmittance of the green filter for light included in the transmission wavelength range of the blue filter, and the blue filter having a peak wavelength of a transmission wavelength Fpb such that 440 nm < Fpb < 460 nm.
According to the present invention, the characteristics of the red filter, green filter and the blue filter, provided on the color liquid crystal display panel, are matched to those of the light source, composed of the main white light source and the auxiliary light source, provided on the backlight device, by way of optimization, thereby enlarging the color reproducing range of a picture displayed on the color liquid crystal display apparatus.

### Brief Description of the Drawings

Fig. is a graph showing spectral characteristics of a color filter of a color liquid crystal display panel provided in a conventional color liquid crystal display apparatus and spectral characteristics of a light source provided in a backlight device.
Fig.2 is a graph showing a color reproducing range of a color liquid crystal display apparatus of the related art employing a CCFL as a light source for the backlight device.
Fig.3 is a graph showing a color range for the green (G) region of Fig.2 to an enlarged scale.
Fig.4 is a graph showing a color range for the blue (B) region of Fig.2 to an enlarged scale.
Fig.5 is a graph showing a color range for the red (R) region of Fig.2 to an enlarged scale.
Fig.6 is an exploded perspective view showing a color liquid crystal display apparatus embodying the present invention.
Fig.7 is a diagrammatic plan view showing a color filter of a color liquid crystal display panel constituting a color liquid crystal display apparatus.
Fig.8 is a block circuit diagram showing a driving circuit driving the color liquid crystal display apparatus.
Fig.9 is a plan view showing essential parts of the backlight device provided in the color liquid crystal display apparatus.
Fig.10 is a longitudinal cross-sectional view showing essential parts of a backlight device provided in the color liquid crystal display apparatus.
Fig.11 is a graph showing spectral characteristics of a main white light source of the backlight device.
Fig.12 is a graph showing spectral characteristics of an auxiliary light source of the backlight device.
Fig.13 is a graph showing spectral characteristics of the main white light source and the auxiliary light source of the backlight device and spectral characteristics of a color filter.
Fig.14 is a graph showing a color reproducing range in case the auxiliary light source is added to the main white light source.
Fig.15 is a graph showing a color range of a green (G) region of Fig.14 to an enlarged scale.
Fig.16 is a graph showing a color range of a blue (B) region of Fig.14 to an enlarged scale.
Fig.17 is a graph showing a color range of a red (R) color region of Fig.14 to an enlarged scale.
Fig.18 is a graph showing spectral characteristics of an improved color filter and spectral characteristics of a light source.
Fig.19 is a graph showing a color reproducing range in case a color filter has been improved.
Fig.20 is a graph showing a color range of a green (G) region in Fig.19.
Fig.21 is a graph showing a color range of a blue (B) region in Fig.19.
Fig.22 is a graph showing a color range of a red (R) region in Fig.19.

### Best Mode for Carrying out the Invention

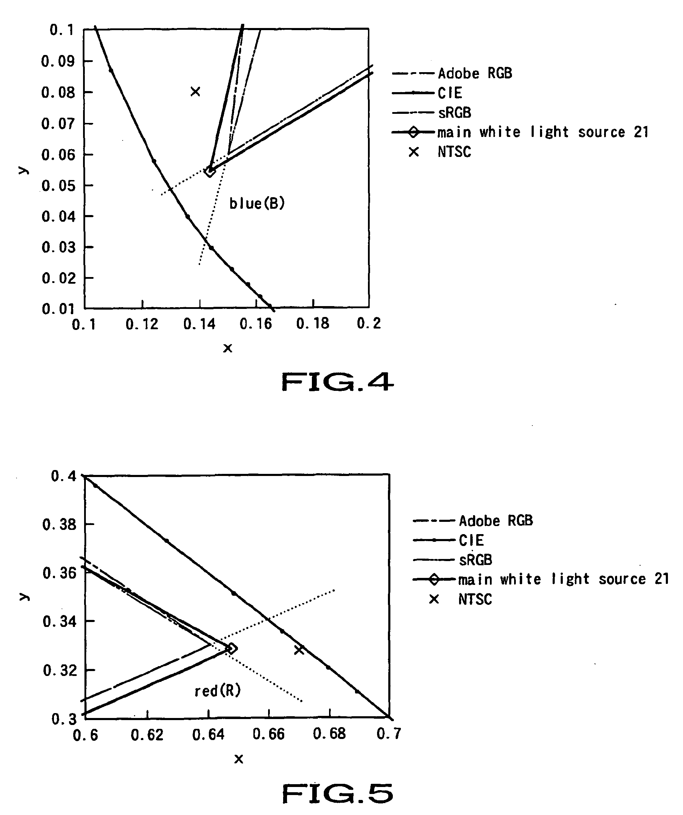

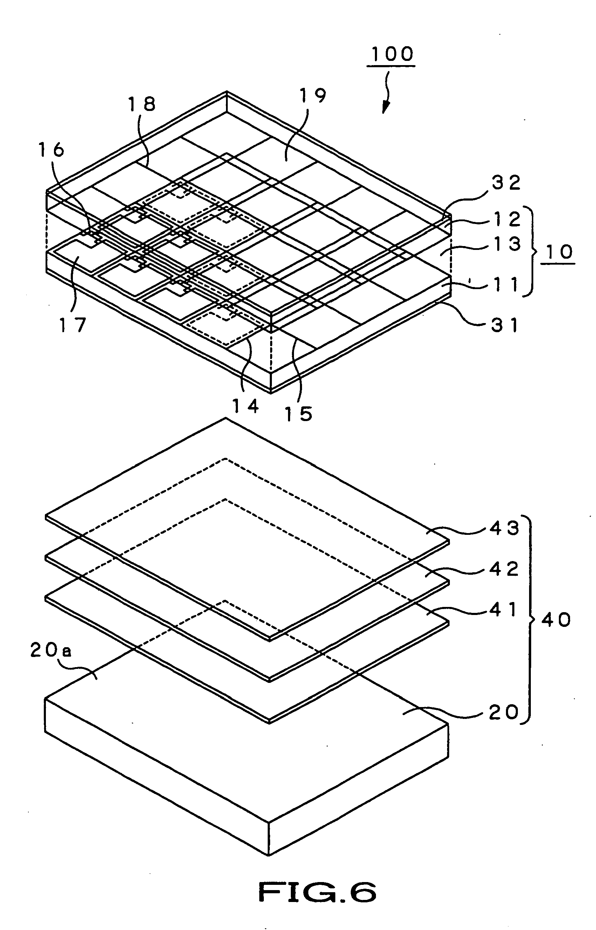

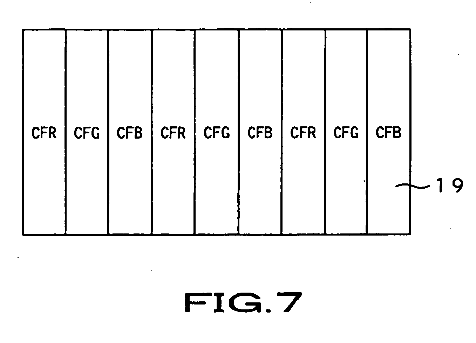

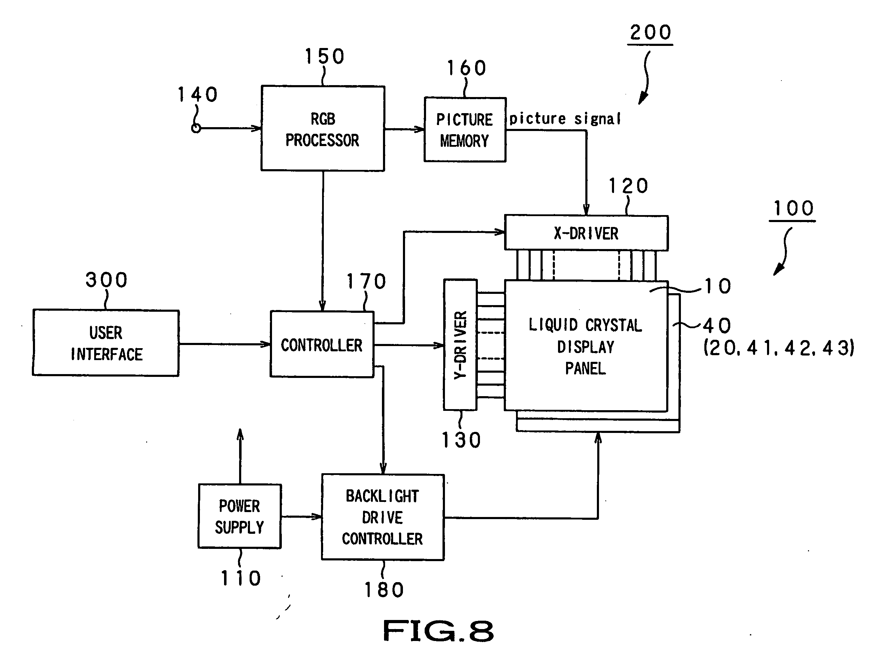

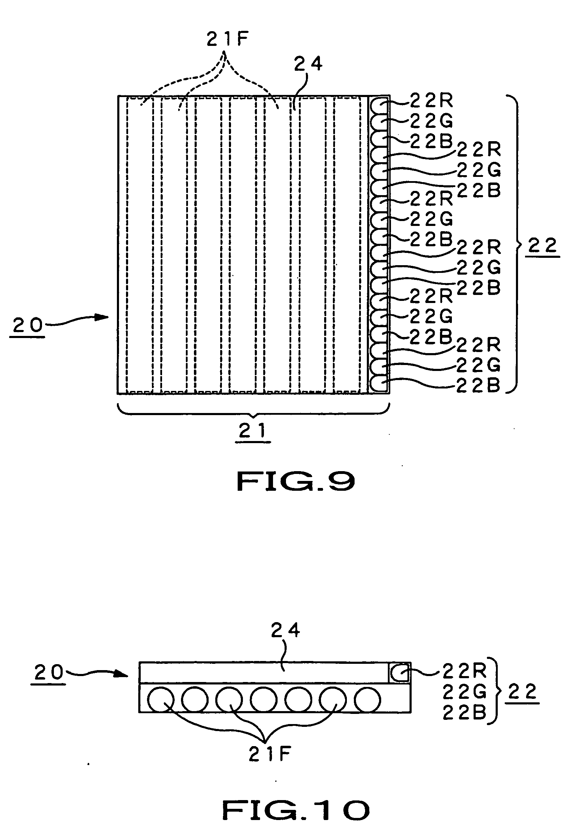

Referring to the drawings, preferred embodiments of the present invention will be described in detail. It should be noted that the present invention is not limited to the embodiments now explained and may be optionally modified without departing from the scope of the invention as defined in the claims.
The present invention is applied to a color liquid crystal display apparatus 100 of the backlight system, configured as shown for example in Fig.6.
In this figure, the transmissive color liquid crystal display apparatus 100 is made up of a transmissive color liquid crystal display panel 10, and a backlight unit 40, provided on the backside of this color liquid crystal display panel 10. This transmissive color liquid crystal display apparatus 100 may be provided with a receiving unit, such as an analog tuner or a digital tuner, not shown, for receiving the ground wave or the satellite wave, and a picture signal processing unit or an audio signal processing unit, also not shown, for processing picture signals or audio signals, received by this receiving unit, respectively. The color liquid crystal display apparatus may also be provided with an audio signal outputting unit, again not shown, such as loudspeaker, for outputting audio signals processed by the audio signal processing unit.
The transmissive color liquid crystal display panel 10 is made up of two transparent substrates, formed by glass or the like (a TFT substrate 11 and a counter-electrode substrate 12), facing each other, and a liquid crystal layer 13 of, for example, twisted nematic (TN) liquid crystal, enclosed in a space between the two substrates. On the TFT substrate 11, there are formed signal lines 14 and scanning lines 15, arranged in a matrix configuration, as well as thin-film transistors 16, as switching elements, and pixel electrodes 17, arranged at the points of intersection of the signal lines 14 and the scanning lines 15. The thin-film transistors 16 are sequentially selected by the scanning lines 15 to write picture signals, supplied from the signal lines 14, in the associated pixel electrodes 17. On the inner surface of the counter-electrode substrate 12, there are formed counter electrodes 18 and a color filter 19.
The color filter 19 will now be described. The color filter 19 is divided into a plural number of segments associated with a pixel. For example, the color filter is divided into three segments, associated with three prime colors, that is, a red filter CFR, a green filter CFG and a blue filter CFB, as shown in Fig.7. The arraying pattern for the color filter may be exemplified by delta array or square array, not shown, in addition to the striped array shown in Fig.7. The color filter 19 will be described in detail subsequently.
With the transmissive color liquid crystal display apparatus 100, the transmissive color liquid crystal display panel 10 is sandwiched between a pair of polarizing plates 31, 32, and driven in accordance with an active matrix system, as white light is illuminated from its backside by the backlight unit 40, thereby displaying a desired full-color picture.
The backlight unit 40 illuminates the color liquid crystal display panel 10 from its backside. Referring to Fig.6, the backlight unit 40 includes a backlight device 20, and a set of optical sheets, stacked on a light radiating surface 20a of the backlight device 20, such as a light diffusing sheet 41, a prism sheet 42 and a polarized light transforming sheet 43. The backlight device 20 includes plural light sources and mixes the light from the light sources to generate white light which is radiated by surface light emission from the light radiating surface 20a. The detailed constitution of the backlight device will be explained subsequently.
The set of optical sheets is made up of a plural number of sheets having the functions of resolving the incident light into mutually perpendicular polarized components, compensating the phase difference of light waves to assure a broad angle of visibility and of preventing coloration, diffusing the incident light or improving the luminance. The set of optical sheets is provided for transforming the light, radiated by surface light emission from the backlight device 20, into illuminating light having optimum optical characteristics for illuminating the color liquid crystal display panel 10. Consequently, the set of optical sheets may include not only the light diffusing sheet 41, prism sheet 42 or polarized light transforming sheet 43, but a variety of other optical sheets having a variety of other optical functions.
The white light, generated on color mixing by the backlight device 20, is illuminated to the color liquid crystal display panel 10 from its backside via the set of optical sheets described above.
The color liquid crystal display apparatus 100 is driven by a driving circuit 200 shown for example in Fig.8.
This driving circuit 200 includes a power supply unit 110 for supplying driving supply power for e.g. the color liquid crystal display panel 10 and the backlight device 20, and an X-driver circuit 120 as well as a Y-driver circuit 130 for driving the color liquid crystal display panel 10. The driving circuit also includes an RGB processor 150, supplied via an input terminal 140 with picture signals received by a receiver, not shown, of the color liquid crystal display apparatus 100, and which are processed by a picture signal processor. The driving circuit also includes a picture memory 160 and a controller 170, both connected to the RGB processor 150, and a backlight driving controller 180 for driving controlling the backlight device 20 of the backlight unit 40.
In this driving circuit 200, the picture signals, transmitted as input via input terminal 140, are subjected to, for example, chroma processing, by the RGB processor 150, and are converted from the composite signals into RGB separate signals, suitable for driving the color liquid crystal display panel 10. The resulting signals are transmitted to the controller 170, while being transmitted via picture memory 160 to the X-driver circuit 120.
The controller 170 controls the X-driver circuit 120 and the Y-driver circuit 130, at a preset timing, matched to the RGB separate signals, in order to drive the color liquid crystal display panel 10 by the RGB separate signals, supplied via picture memory 160 to the X-driver circuit 120, thereby displaying a picture corresponding to the RGB separate signals.
The backlight driving controller 180 suitably applies the voltage, supplied from the power supply 110, to control the light sources of the backlight device 20.
A user interface 300 is an interface for selecting a channel received by the aforementioned receiving unit, not shown, adjusting the volume of audio output from an audio output unit, not shown, and for adjusting the white balance or the luminance of white light from the backlight device 20 adapted for illuminating the color liquid crystal display panel 10.
The constitution of the backlight device 20, provided in the backlight unit 40, will now be described.
If the CCFL is used as a light source for the backlight device, the color reproducing range of the sRGB standard cannot be covered perfectly, as explained already with reference to Fig.2. The color reproducing range of the CCFL covers the color reproducing range of the sRGB standard, in the blue (B) region and in the red (R) region, however, it fails to cover the color reproducing range of the sRGB standard in the green (G) region, as shown in Figs.3 to 5.
Although the color ranges for the blue (B) region and for the red (R) region exceed the color reproducing range of the sRGB standard, as shown in Figs.4 and 5, those color ranges cannot be said to be broad enough to increase the degree of freedom in color creation. Specifically, the color range of the green (G) region of the CCFL is offset from the green (G) region of the sRGB standard in a direction towards the blue to green color. Thus, if the color liquid crystal display panel 10 is illuminated with the backlight device 20, having the CCFL, having spectral characteristics shown in Fig.1, as light source, the sRGB standard may, strictly speaking, not be complied with, so that a displayed image may impart extraneous feeling to a viewer.
The color filter used needs to be improved, at least in the green (G) region, shown in Fig.3, so as to give the chromaticity satisfying the sRGB standard. Moreover, the color ranges of the blue (B) region and the red (R) region, shown in Figs.4 and 5, are desirably enlarged further from the perspective of color reproduction. However, since the bright line spectrum of the CCFL is determined by the three wavelength phosphorescent materials applied on the inner surface of the light emitting tube of the CCFL, it is rather difficult to change the light emitting wavelength of the CCFL.
Hence, in the color liquid crystal display apparatus 100, shown as the best mode for carrying out the present invention, a main white light source 21, made up of a CCFL, and an auxiliary light source 22, operating as an assistant for reducing the adverse effect of the bright line spectrum of the main white light source 21, are used as light sources for the backlight device 20. The auxiliary light source 22 includes at least one of the red light emitting diode 22R, a green light emitting diode 22G and a blue light emitting diode 22B.
Referring to Figs.9 and 10, the backlight device 20 of the color liquid crystal display apparatus 100 includes the main white light source 21 of an area-lit system, made up by a plural number of three-wavelength light emitting phosphorescent lamps (CCFLs) 21F, arranged parallel to one another, and the auxiliary light source 22 of the edge-lit system. This auxiliary light source 22 is made up by repetitions of red light emitting diodes 22R, green light emitting diodes 22G and blue light emitting diodes 22B, arranged on a lateral side of a light guide plate 24. The major surface of the light guide plate 24 is arranged on the main white light source 21. Meanwhile, Figs.9 and 10 are a plan view and a longitudinal cross-sectional view, respectively, showing the essential portions of the backlight device 20.
In the backlight device 20, there are provided a diverter plate, not shown, and a light diffusing plate, also not shown. The diverter plate has the function of mixing the white light, radiated from the main white light source 21, and various color light beams, radiated from the light emitting diodes 21, as the auxiliary light source 22, into white light free of uneven colors. The light diffusing plate performs the role of internally diffusing the white light, radiated from the diverter plate, by planar light emission.
The present invention will now be explained with reference to specified Examples.

### Example 1

In Example 1, peak wavelengths of a red light emitting diode 22R, a green light emitting diode 22G and a blue light emitting diode 22B, making up the auxiliary light source 22, are optimally selected so that the auxiliary light source will act as an assistant for the main white light source 21, in such a manner that the color gamut will be broader, as the color reproducing range of the color liquid crystal display apparatus 100 completely covers that of the sRGB standard.

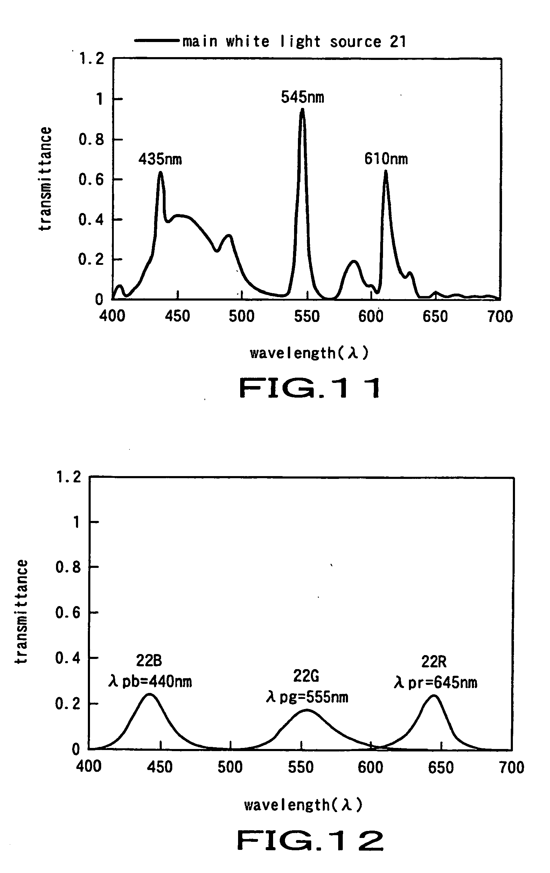

Fig.11 shows spectral characteristics of a CCFL 21F used as the main white light source 21 of the backlight device 20. It may be seen from Fig.11 that the CCFL 21F, used as the main white light source 21, has spectral characteristics which are the same as those shown in Fig.1. That is, the spectral characteristics of the CCFL 21F are those of a routinely used CCFL. Meanwhile, for explanation sake, the spectral characteristics of the CCFL 21F, shown in Fig.11, are assumed to be equivalent to those of the main white light source 21.
Referring to Fig.11, a bright line spectrum BLr, a bright line spectrum BLg and a bright line spectrum BLb of the red light beam, the green light beam and the blue light beam of the main white light source 21, respectively, are such that the bright line spectrum BLr = 610 nm, bright line spectrum BLg = 545 nm and the bright line spectrum BLb = 435 nm.

### <Improvement in green (G) region>

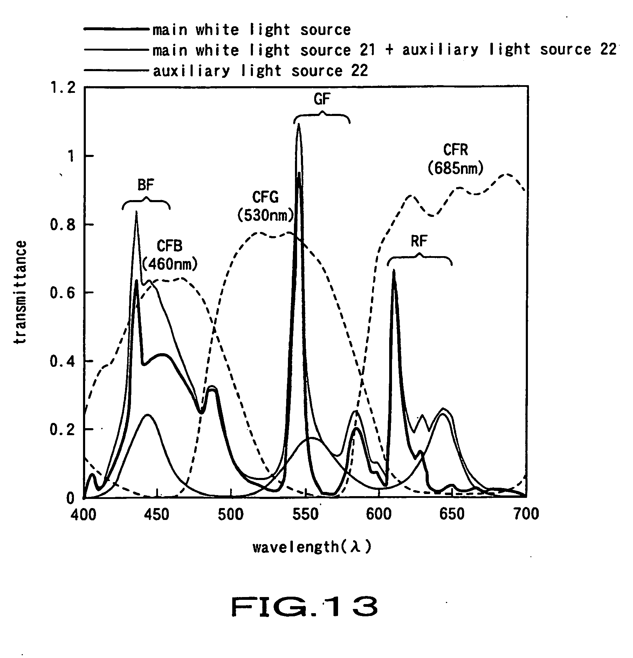

If only the CCFL of the spectral characteristics shown in Fig.1 is used as a light source, the sRGB standard cannot be satisfied as to the green (G) region, with chromaticity point becoming offset in a direction towards the blue to green side, as shown in Fig.3. If this offset in the chromaticity point is to be reduced so as to cover the sRGB standard, it is sufficient that the green light emitting diode 22G, the spectrum of which has a peak at a point offset towards the long wavelength side as compared to the bright line spectrum BLg of the green light of the CCFL, is used as one light emitting diode of the auxiliary light source 22.
The bright line spectrum BLg of the green color of the main white light source 21 is 545 nm, as described above. It is therefore sufficient to provide a green light emitting diode 22G, having spectral characteristics shown in Fig.12, with the peak wavelength λpg = 555 nm, longer than the above bright line spectrum BLg, as one light emitting diode of the auxiliary light source 22. By so doing, the long wavelength side spectral component is summed to the bright line spectrum BLg of the green light of the main white light source 21 (= 545 nm), as shown in Fig. 13.
In Fig. 13, there are also shown the spectral characteristics of a color filter 19 made up of a red filter CFR, with a peak wavelength Fpr = 685 nm, a green filter CFG, with a peak wavelength Fpg = 530 nm and a blue filter CFB, with a peak wavelength Fpb = 460 nm. Meanwhile, for explanation sake, the color filter 19, having spectral characteristics shown for example in Fig.13, is referred to as a color filter 19Z.

### <Improvement in the blue (B) region>

If only the CCFL, having spectral characteristics shown in Fig.1, is used as a light source, the sRGB standard is covered in the blue (B) region, as shown in Fig.4, however, the color gamut is narrower.
The reason is that, although the bright line spectrum BLb of the blue light of the main white light source 21 is 435 nm, as shown in Fig.11, the sub-peak lying on the wavelength side longer than the bright line spectrum BLb exerts stronger influence, insofar as the light intensity is concerned, with the result that the chromaticity point is determined by spectral components in the vicinity of 450 nm.
Hence, a blue light emitting diode 22B, having spectral characteristics shown in Fig.12, with the peak wavelength λpb = 440 nm, is provided as one light emiting diode of the auxiliary light source 22, for raising the spectral intensity on the short wavelength side closer to the bright line spectrum BLb of the main white light source 21, shorter than 450 nm. This increases the spectral intensity in the vicinity of 440 nm which is close to the bright line spectrum BLb of the main white light source 21 (= 435 nm), in the wavelength range BF of blue light, as shown in Fig.13.

### <Improvement in the red (R) region>

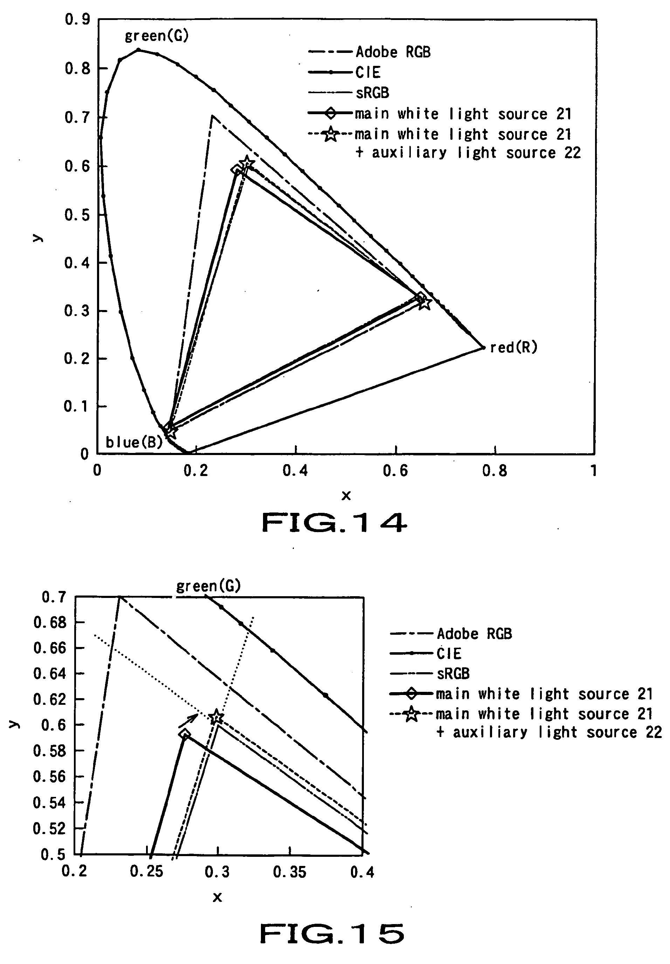

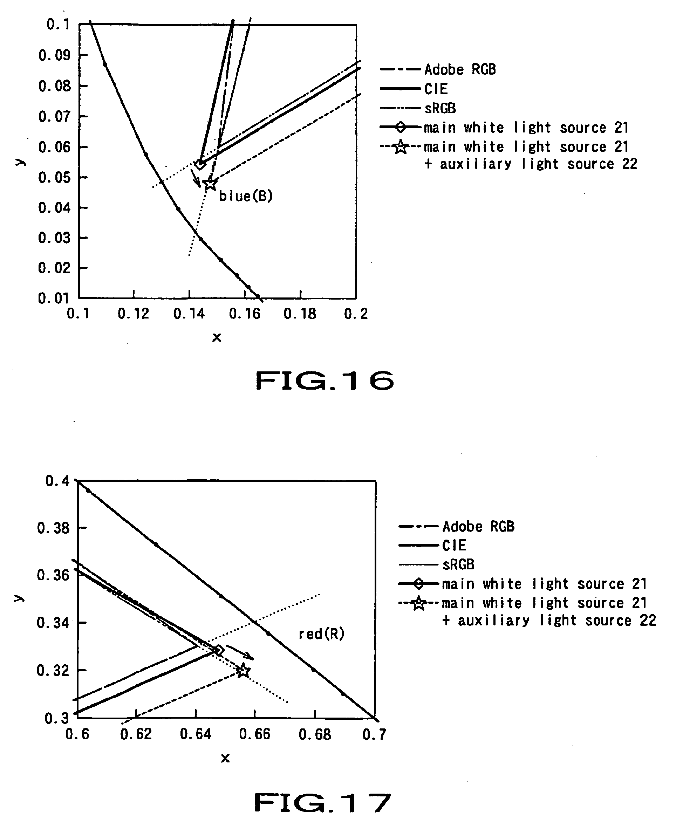

If only the CCFL, having spectral characteristics shown in Fig.1, is used as a light source, the sRGB standard is covered in the red (R) region, as shown in Fig.5, however, the color gamut is narrower.
This may be attributable to the fact that the bright line spectrum BLr of the main white light source 21 is at a relatively short wavelength side of 610 nm, as shown in Fig.11.
Thus, for raising the spectral intensity on the wavelength side longer than the bright line spectrum BLr = 610 nm of the main white light source 21, a red light emitting diode 22R, having spectral characteristics shown in Fig.12, with the peak wavelength λpg = 645 nm, as shown in Fig. 12, is provided as one light emitting diode of the auxiliary light source 22. This increases the spectral intensity in the vicinity of 640 nm which is close to the bright line spectrum BLr of the main white light source 21 (= 610 nm), in the wavelength range RF of blue light, as shown in Fig.13.
The display light radiated from the color liquid crystal display panel 10, in case of using, as auxiliary light source 22 for the main white light source 21, a green light emitting diode 22G having a peak wavelength λpg = 555 nm, a blue light emitting diode 22B having a peak wavelength λpb = 440 nm and a red light emitting diode 22R having a peak wavelength λpr = 645 nm, is measured with a colorimeter, and chromaticity points are plotted in an xy chromaticity diagram.
This gives a color reproducing range shown in Fig.14.
Figs.15 to 17 show the respective regions of the green (G), blue (B) and red (R) to an enlarged scale. Meanwhile, in the xy-chromaticity diagrams, shown in Figs. 14 to 17, there are also shown the color reproducing range of the Adobe RGB standard, the XYZ color system, prescribed by the Commission Internationale de l'Eclairage (CIE), the color reproducing range of the sRGB standard and the color reproducing range for the case of using only the main white light source 21 as light source.
It may be seen from Fig.15 that, for the green (G) region, the chromaticity point of the main white light source 21 has been improved to a chromaticity point which covers the sRGB standard. It may also be seen from Fig. 16 that, for the blue (B) region, the chromaticity point of the main white light source 21 has been improved to a chromaticity point indicating a deeper blue color, thus enlarging the color gamut. It may also be seen from Fig.17 that, for the red (R) region, the chromaticity point of the main white light source 21 has been improved to a chromaticity point indicating a deeper red color, thus enlarging the color gamut.
Thus, by providing the auxiliary light source 22 for assisting the main white light source 21, improvement may be made in the green (G) region, for which it has so far been not possible to cover the color reproducing range of the sRGB standard. In addition, it is possible to enlarge the color ranges of the blue (B) region and the red (R) region. The result is the appreciably improved degree of freedom in color creation of a picture displayed on the color liquid crystal display apparatus 100.
On the other hand, the NTSC ratio may be improved from 74% to 77% through the use of the auxiliary light source 22. In addition, the luminance, which is usually in the relationship of tradeoff with color gamut enlargement, may be higher by a factor of 1.5 as compared to the case of using only the main white light source 21. This high luminance may be achieved despite the fact that the light emission intensity of the red light emitting diode 22R, green light emitting diode 22G and the blue light emitting diode 22B, used as auxiliary light source 22, is set to approximately 20% of that of the main white light source 21.

### Embodiment

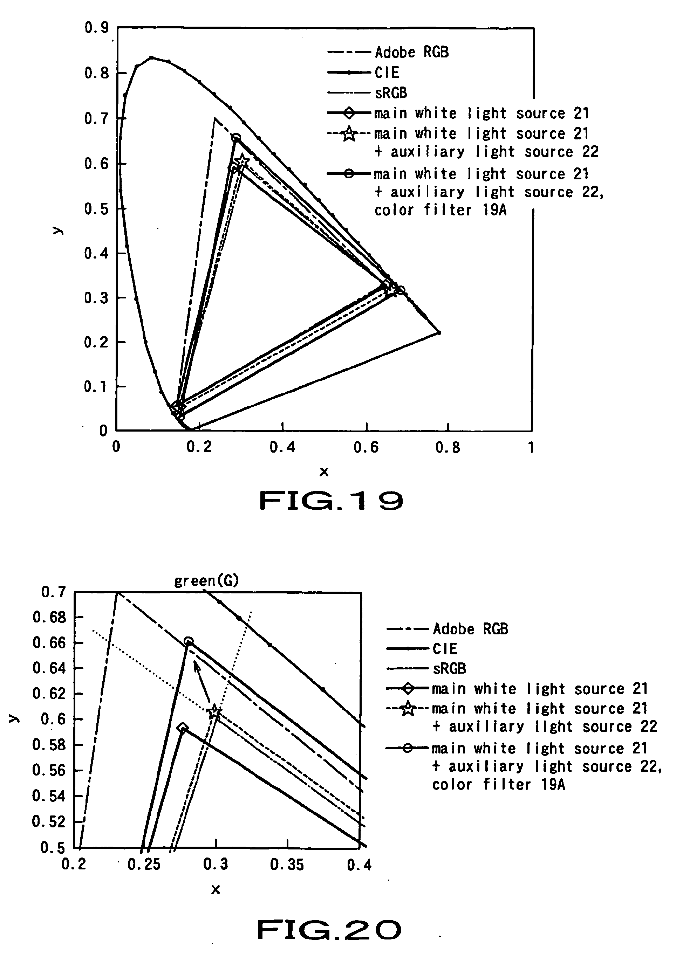

In the above Example 1, the auxiliary light source 22 used is made up of the red light emitting diode 22R, green light emitting diode 22G and the blue light emitting diode 22B, having spectral characteristics which will improve the bright line spectrum of the main white light source 21 such that, as the sRGB standard is impeccably covered, the color gamut will be enlarged further.
In the embodiment, the color ranges for the red (R) region, green (G) region and the blue (B) region, enlarged by the use of the auxiliary light source 22 in Example 1, are to be enlarged further to improve the degree of freedom in color creation further. Among the factors obstructive to enlarging the color gamut, there is possibly such a factor as lowered color purity, brought about by the sub-peak proper to the CCFL affecting the neighboring color filter 19.
Thus, the characteristics of the red filter CFR, green filter CFG and the blue filter CFB, provided on the color liquid crystal display panel 10, and those of the main white light source 21 and the auxiliary light source 22, provided on the backlight device 20, are matched to one another and optimized such as to enlarge the color reproducing range of the picture displayed on the color liquid crystal display panel 10.

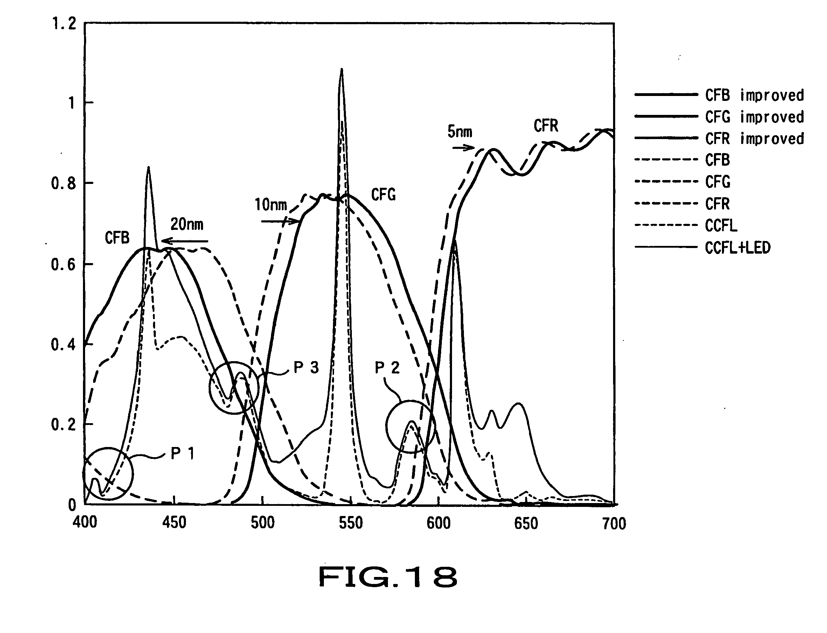

Fig.18 shows spectral characteristics of the light sources, made up of the main white light source 21 and the auxiliary light source 22, and those of the color filter 19, matched to the spectral characteristics of the light sources. In Fig.18, the spectral characteristics by a thick dotted line, are those of the color filter 19Z, described above and shown in Fig.13. The spectral characteristics, shown by a thick solid line, are the spectral characteristics of the color filter 19 improved over the color filter 19Z for matching to the spectral characteristics of the light sources, made up of the main white light source 21 and the auxiliary light source 22.
As may be seen from the spectral characteristics of the color filter 19, shown by the thick solid line in Fig. 18, the red filter CFR is designed to have transmittance in a region P1 of the transmission wavelength band of the blue filter CFB equal to zero. If the transmittance of the red filter CFR in this region P1 is not zero, the blue light would be lowered in color purity. Moreover, the red filter CFR has its peak wavelength Fpr shifted by 5 nm from 685 nm to 690 nm so that the transmission wavelength range will be shifted towards the long wavelength side as it clears the sub-peak of the main white light source 21 lying in a region P2 in the vicinity of 580 nm.
The blue filter CFB has its peak wavelength Fpb shifted by 20 nm from 460 nm to 440 nm so that the transmission wavelength range will be shifted towards the short wavelength side as it clears the sub-peak of the main white light source 21 present in a region P3 in the vicinity of 490 nm.
The green filter CFG has its half-value width Fhwg shifted by 10 nm from 100 nm to 90 nm so that only the transmission wavelength range on the short wavelength side will be shifted towards the long wavelength side as it clears the sub-peak of the main white light source 21 present in the region P3 in the vicinity of 490 nm.
In the following explanation, the color filter 19, in which the peak wavelength Fpb of the blue filter CFB, the peak wavelength Fpr of the red filter CFR and the peak wavelength Fpg of the green filter CFG in the color filter 19Z are set so that 440 nm ≤ Fpb ≤ 460 nm, 685 nm ≤ Fpr ≤ 690 nm and Fpg = 530 nm, and in which the half-value width Fhwg of the transmission wavelength band of the green light is narrowed down only on the short wavelength side so that 90 nm ≤ Fhwg ≤ 100 nm, is referred to as a color filter 19A.
The auxiliary light source 22 is used in combination with the main white light source 21 and, as the color filter 19A, improved over the color filter 19Z, a color filter with Fpb = 440 nm, Fpg = 530 nm, Fpr = 690 nm and with Fhwg = 90 nm, is used. In this case, the display light, radiated from the color liquid crystal display panel 10, was measured with a colorimeter and chromaticity points thus found were plotted on an xy chromaticity diagram. Thus, a color reproducing range shown in Fig.19 was obtained.

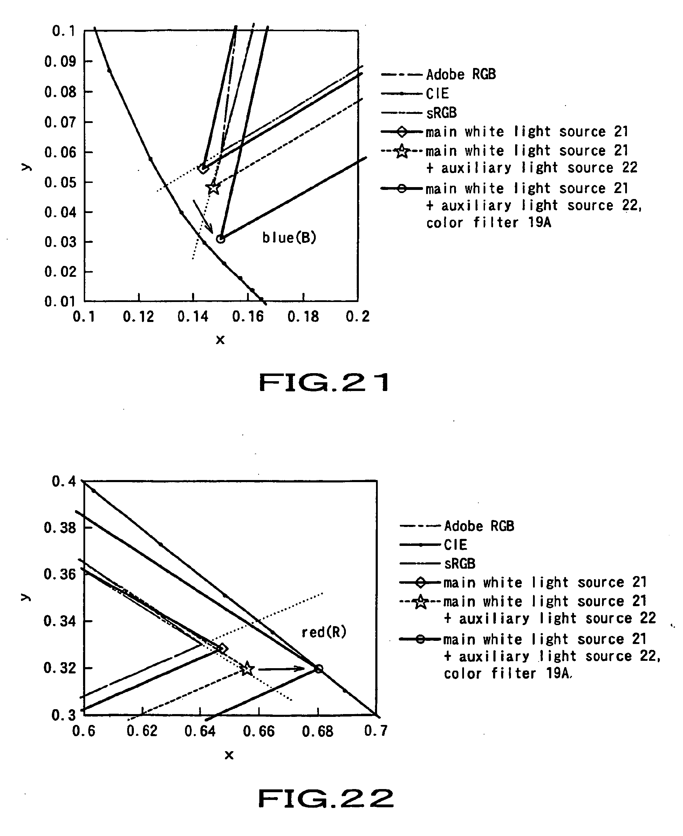

In Figs.20 to 22, the regions of the green (G) color, blue (B) color and the red (R) color, shown in the xy- chromaticity diagram of Fig.19, respectively, are shown to an enlarged scale. Meanwhile, in the xy chromaticity diagrams of Figs.19 to 22, there are also shown the color reproducing range of the Adobe RGB standard, the XYZ color system prescribed by the Commission Internationale de l'Eclairage (CIE), the color reproducing range of the sRGB standard and the color reproducing range in case of using only the main white light source 21 as light source.
It may be seen from Figs.20 to 22 that, by using the color filter 19A in place of the color filter 19Z, the color ranges may be enlarged appreciably for the green (G) region, blue (B) region and the red (R) region in their entirety.
That is, the color ranges of the green (G) region, blue (B) region and the red (R) region may further be enlarged by improving the color filter 19 so that spectral characteristics of the color filter will be matched optimally to those of the light sources made up of the main white light source 21 and the auxiliary light source 22 provided for assisting the main white light source 21. Thus, the degree of freedom in color creation in the display picture, demonstrated on the color liquid crystal display apparatus, may be improved appreciably.
On the other hand, the NTSC ratio has been improved from 74% to 93% as a result of improving the color filter 19. In addition, the luminance, which is usually in the relationship of tradeoff with color gamut enlargement, may be improved by a factor of 1.5 as compared to the case of using only the main white light source 21. This high luminance may be achieved despite the fact that the light emission intensity of the red light emitting diode 22R, green light emitting diode 22G and the blue light emitting diode 22B, used as auxiliary light source 22, is set to approximately 20% of that of the main white light source 21.
With the color liquid crystal display apparatus 100, configured as described above, the color reproducing range of a picture displayed on the color liquid crystal display panel 10 may be enlarged by matching, by way of optimization, the characteristics of the red filter CFR, green filter CFG and the blue filter CFB, provided on the color liquid crystal display panel 10, to those of the main light source 21 and the auxiliary light source 22 provided on the backlight device 20. For example, the emerald color of the sea, wine-red scarlet or deep green of the trees or grasses coming out, may be displayed spontaneously to natural colors.
It is noted that the items of improvement for the red light emitting diode 22R, green light emitting diode 22G and the blue light emitting diode 22B, as well as the respective color filter segments of the color filter 19, need not be met in their entirety. That is, those items may be used either alone or in combinations for enlarging the color reproducing range. For example, it is sufficient that at least one of the red light emitting diode 22R, green light emitting diode 22G and the blue light emitting diode 22B is included in the auxiliary light source 22.
The present invention is not limited to the particular configurations of the embodiment described with reference to the drawings. It will be appreciated that the present invention may encompass various changes or corrections such as may readily be arrived at by those skilled in the art within the scope of the invention as defined by the claims.

## Claims

1. A color liquid crystal display apparatus (100) including a transmissive color liquid crystal display panel (10), having a color filter made up of three prime color filters (19) for wavelength selecting and transmitting red light, green light and blue light, and a backlight device (20) for illuminating said color liquid crystal display panel with white light from a backside thereof, wherein said backlight device includes a main white light source (21) having a three wavelength phosphorescent lamp (21F) emitting light with three or more wavelengths, and an auxiliary light source (22) having at least one of a red light emitting diode (22R), a green light emitting diode (22G) and a blue light emitting diode (22B), said red light emitting diode emitting red light with a peak wavelength λpr = 645 nm, said green light emitting diode emitting green light with a peak wavelength λpg = 555 nm and said blue light emitting diode emitting blue light with a peak wavelength λpb = 440 nm; and
color mixing means (41,42) for mixing the light emitted from said light sources to generate said white light;
said color filter including a red color filter (CFR) having a peak wavelength of a transmission wavelength range Fpr such that 685nm ≤ Fpr ≤ 690 nm, and having a zero transmittance for light included in a transmission wavelength range of a blue filter (CFB), a green filter (CFG) having a peak wavelength of a transmission wavelength range Fpg equal to 530 nm and having a half-value width Fhwg of said transmission wavelength range such that 90 nm ≤ Fhwg ≤ 100 nm, and said blue filter having a peak wavelength of a transmission wavelength Fpb such that 440 nm ≤ Fpb ≤ 460 nm.

2. The color liquid crystal display apparatus according to claim 1 wherein the intensity of light emitted by said auxiliary light source (22) is approximately 20% of the intensity of light emitted by said main white light source (21).

## Patentansprüche

1. Farb-Flüssigkristallanzeigevorrichtung (100), welche ein Übertragungs-Farbflüssigkristallanzeigefeld (10) aufweist, welche ein Farbfilter hat, welches aus drei Primärfarbfiltern (19) zur Wellenlängenauswahl und zur Übertragung von Rotlicht, Grünlicht und Blaulicht ausgebildet ist, und eine Hintergrundlichteinrichtung (20), um das Farbflüssigkristallanzeigefeld mit Weißlicht von seiner Rückseite zu beleuchten, wobei die Hintergrundlichteinrichtung umfasst:
eine Hauptweißlichtquelle (21), welche eine Dreiwellen-Phosphoreszenz-Lampe (21 F) hat, welche Licht mit drei oder mehreren Wellenlängen emittiert, und eine Hilfslichtquelle (22), welche zumindest eine von einer rotlicht-emittierenden Diode (22R), einer grünlicht-emittierenden Diode (22G) und einer blaulichtemittierenden Diode (22R) hat, wobei die rotlicht-emittierende Diode (22R) Rotlicht mit einer Spitzenwert-Wellenlänge λpr=645nm emittiert, die grünlicht-emittierende Diode Grünlicht mit einer Spitzenwert-Wellenlänge λpg=555nm emittiert, und die blaulicht-emittierende Diode Blaulicht mit einer Spitzenwert-Wellenlänge λpb=440 nm emittiert; und
eine Farbmischeinrichtung (41, 42) zum Mischen des Lichts, welches von den Lichtquellen emittiert wird, um das Weißlicht zu erzeugen;
wobei das Farbfilter ein Rotfarbfilter (CFR) aufweist, welches eine Spitzenwert-Wellenlänge eines Übertragungswellenlängenbereichs Fpr hat, so dass 685 nm ≤ Fpr ≤ 690 nm, und einen Null-Durchlässigkeitsgrad für Licht hat, welches in einem Übertragungswellenlängenbereich eines Blaufilters (CFB) enthalten ist, ein Grünfilter (CFG), welches eine Spitzenwert-Wellenlänge eines Übertragungswellenbereichs Fpg gleich 530 nm hat und welches einen Halbwert-Breite Fhwg des Übertragungswellenbereichs hat, so dass 90 nm ≤ Fhwg ≤ 100 nm, und das Blaufilter, welches eine Spitzenwert-Wellenlänge einer Übertragungswellenlänge Fpb hat, so dass 440 nm ≤ Fpb ≤ 460 nm.

2. Farb-Flüssigkristallanzeigevorrichtung nach Anspruch 1, wobei die Intensität von Licht, welches durch die Hilfslichtquelle (22) emittiert wird, ungefähr 20% der Intensität des Lichts ist, welches durch die Hauptweißlicht-Quelle (21) emittiert wird.

## Revendications

1. Dispositif d'affichage couleur à cristaux liquides (100) comprenant un panneau d'affichage couleur à cristaux liquides transmissif (10) comportant un filtre coloré composé de trois filtres de couleurs primaires (19) pour la sélection de longueur d'onde et la transmission d'une lumière rouge, d'une lumière verte et d'une lumière bleue, et un dispositif de rétroéclairage (20) pour éclairer ledit panneau d'affichage couleur à cristaux liquides avec une lumière blanche à partir d'un côté arrière de celui-ci, dans lequel ledit dispositif de rétroéclairage comprend :
une source de lumière blanche principale (21) comportant une lampe phosphorescente (21F) à trois longueurs d'onde émettant de la lumière avec trois longueurs d'onde ou plus, et une source de lumière auxiliaire (22) comportant au moins l'une d'une diode électroluminescente rouge (22R), d'une diode électroluminescente verte (22G) et d'une diode électroluminescente bleue (22B), ladite diode électroluminescente rouge émettant une lumière rouge avec une longueur d'onde de pic λpr = 645 nm, ladite diode électroluminescente verte émettant une lumière verte avec une longueur d'onde de pic λpg = 555 nm, et ladite diode électroluminescente bleue émettant une lumière bleue avec une longueur d'onde de pic λpb = 440 nm ; et
des moyens de mélange de couleurs (41, 42) pour mélanger les lumières émises par lesdites sources de lumière afin de générer ladite lumière blanche ;
ledit filtre coloré comprenant un filtre de couleur rouge (CFR) ayant une longueur d'onde de pic d'une plage de longueur d'onde de transmission Fpr telle que 685 nm ≤ Fpr ≤ 690 nm, et ayant une transmittance nulle pour la lumière incluse dans une plage de longueur d'onde de transmission d'un filtre bleu (CFB), un filtre vert (CFG) ayant une longueur d'onde de pic d'une plage de longueur d'onde de transmission Fpg égale à 530 nm et ayant une largeur à mi-hauteur Fhwg de ladite plage de longueur d'onde de transmission telle que 90 nm ≤ Fhwg ≤ 100 nm, et ledit filtre bleu ayant une longueur d'onde de pic d'une longueur d'onde de transmission Fpb telle que 440 nm ≤ Fpb ≤ 460 nm.

2. Dispositif d'affichage couleur à cristaux liquides selon la revendication 1, dans lequel l'intensité de la lumière émise par ladite source de lumière auxiliaire (22) est égale à environ 20 % de l'intensité de la lumière émise par ladite source de lumière blanche principale (21).
